# EUROPÄISCHE PATENTANMELDUNG

(11) **EP 0 560 003 A1**
(43) Veröffentlichungstag der Anmeldung: **15.09.1993**
(21) Anmeldenummer: 92870042.6
(22) Anmeldetag: 13.03.1992
(51) Int. Cl.: A61C 13/12

(54) **Bearbeitungsmaschine für die Zahntechnik**

(71) Anmelder: de Witte, Jozef, B-9100 Lokeren (BE)
(72) Erfinder: de Witte, Jozef, B-9100 Lokeren (BE)
(74) Vertreter: Donné, Eddy

(57) **Zusammenfassung**

Bearbeitungsmaschine für die Zahntechnik, dadurch gekennzeichnet daß sie besteht in die Kombination eines rotativen Schnittwerkzeuges (1), eines Motors (2) für das Antreiben des Schnittwerkzeuges (1), einer ersten Stützfläche (3) die sich senkrecht auf der Drehachse (4) des Schnittwerkzeuges (1) erstreckt und einer zweiten Stützfläche (5) die eine Stellung senkrecht auf der ersten Stützfläche (3) einnimmt oder einnehmen kann und die zum Schnittwerkzeug (1), beziehungsweise davon weg, versetzt werden kann.

## Beschreibung

Diese Erfindung bezieht sich auf eine Bearbeitungsmaschine für die Zahntechnik, besonders für das Bearbeiten von Gipsmodellen und anderen Materialien und dergleichen mehr, die, wie bekannt ist, beim Herstellen von Zahnprothesen angewendet werden.

Um solche Modelle zu bearbeiten wird bisher hauptsächlich Gebrauch gemacht von Handschnittwerkzeugen wie diverse kleine Messer, Meißel, Schleifpapier und dergleichen mehr; von Handfräsmaschinen oder von Apparatur die nur eine Teilbearbeitung ausführen können, wie Zahnkranzmaschinen oder Schleifmaschinen für das Formen von Befestigungsrillen. Diese Techniken haben den Nachteil daß sie verhältnismäßig zeitraubend sind, daß sie zu gefährlich sind für die Benutzer und daß beim Gebrauch davon, es eine relativ große Chance gibt daß sich einen Bruch in den Modellen ergibt. Dieser Nachteil wird dadurch noch verstärkt daß die Dentalgipse ständig härter werden, besonders wenn synthetische Gipse und andere Modellmaterialien angewendet werden.

Die heutige Erfindung bezieht sich auf eine Bearbeitungsmaschine für das Bearbeiten von Gipsmodellen und dergleichen mehr, wodurch den obengenannten Nachteilen eine Lösung geboten wird.

Besonders handelt es sich um eine Maschine mit der mehrere Bearbeitungen ausgeführt werden können.

Die heutige Erfindung bezweckt gleichfalls eine Maschine wodurch einige Bearbeitungen sehr genau, aber im Handumdrehen, ausgeführt werden können.

Zu diesem Zweck handelt es sich bei dieser Erfindung um eine Bearbeitungsmaschine für die Zahntechnik, dadurch gekennzeichnet daß sie bestellt aus die Kombination eines rotativen Schnittwerkzeuges, eines Motors für das Antreiben des Werkzeuges, einer ersten Stützfläche, die sich senkrecht auf der Drehachse des Schnittwerkzeuges erstreckt und einer zweiten Stützfläche die eine Stellung senkrecht auf der ersten Stützfläche einnimmt oder einnehmen kann und die in Richtung auf das Schnittwerkzeug, beziehungsweise davon weg, versetzt werden kann.

In der vorzughabenden Ausführungsform kann die zweite Stützfläche auf die Seite gedreht werden, dermaßen daß die erste Stützfläche völlständig frei kommt.

Vorzugsweise, besteht das Schnittwerkzeug aus einer gerandelten Fräse mit einer funktionellen Schnittlänge von minimal 4 cm Länge.

In der Absicht die Kennzeichen der Erfinding entsprechend, besser zu zeigen ist hiernach beispielsweise, und ohne einigen einschränkenden Charakter, eine vorzughabende Ausführungsform beschrieben unter Hinweis auf die beigefügten Zeichnungen in den :
Abbildung 1 die Bearbeitungsmaschine laut der Entfindung in Seitenansicht zeigt;
Abbildung 2 eine Sicht laut Pfeil F2 in Abbildung 1 zeigt;
Abbildung 3 eine Sicht gleich der von Abbildung 1, für eine andere Stellung zeigt;
Abbildungen 4 und 5 Schnitte laut Linien IV-IV und V-V in Abbildung 3 zeigen;
Abbildung 6 einen Schnitt laut Linie VI-VI in Abbildung 4 zeigt;
Abbildung 7 eine Sicht laut Pfeil F7 in Abbildung 2 zeigt;
Abbildung 8 einen Schnitt laut Linie VIII-VIII in Abbildung 2 zeigt;
Abbildung 9 eine Sicht laut Pfeil F9 in Abbildung 2 zeigt;
Abbildungen 10 bis 14 einige Anwendungen der Bearbeitungsmaschine zeigen.

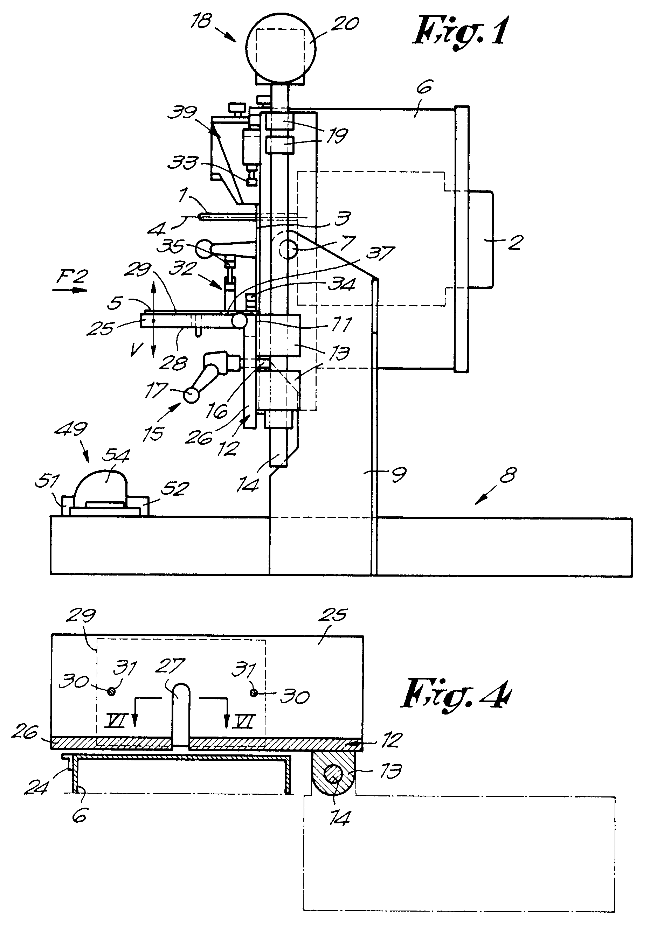

Wie gezeigt in den Abbildungen 1 bis 3 besteht die Bearbeitungsmaschine laut der Erfindung hauptsächlich aus einem rotativen Schnittwerkzeug 1, einem Motor 2 für das Antreiben des Schnittwerkzeuges 1, einer ersten Stützfläche 3 senkrecht auf der Drehachse 4 des Schnittwerkzeuges 1 und einer zweiten Stützfläche 5 die wenigstens in einer Stellung senkrecht auf der ersten Stützfläche 3 steht oder gebracht werden kann und die via eine Richtung V über die erste Stützfläche 3 verschiebbar ist, in Richtung auf das Schnittwerkzeug, oder davon weg.

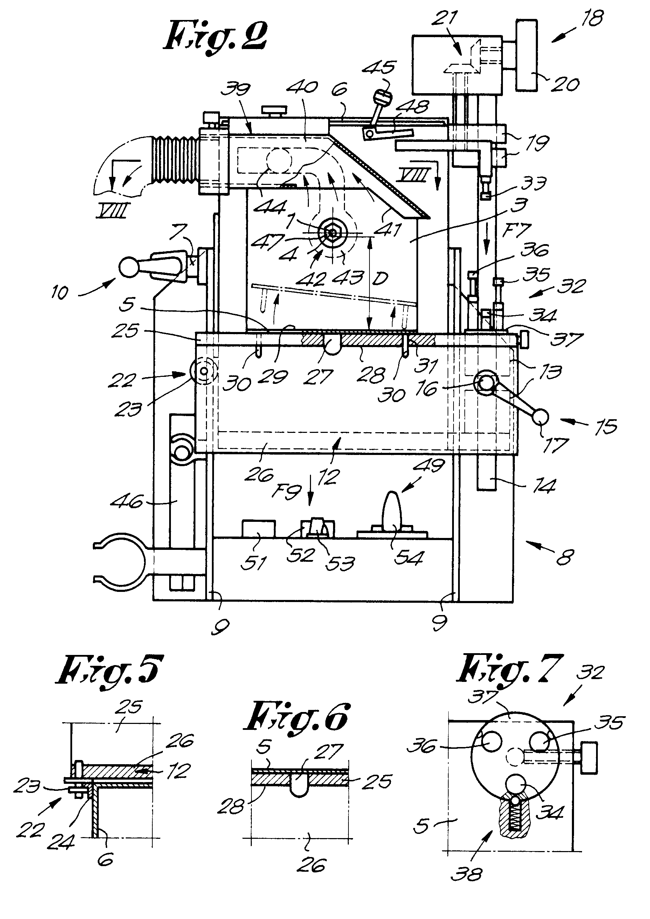

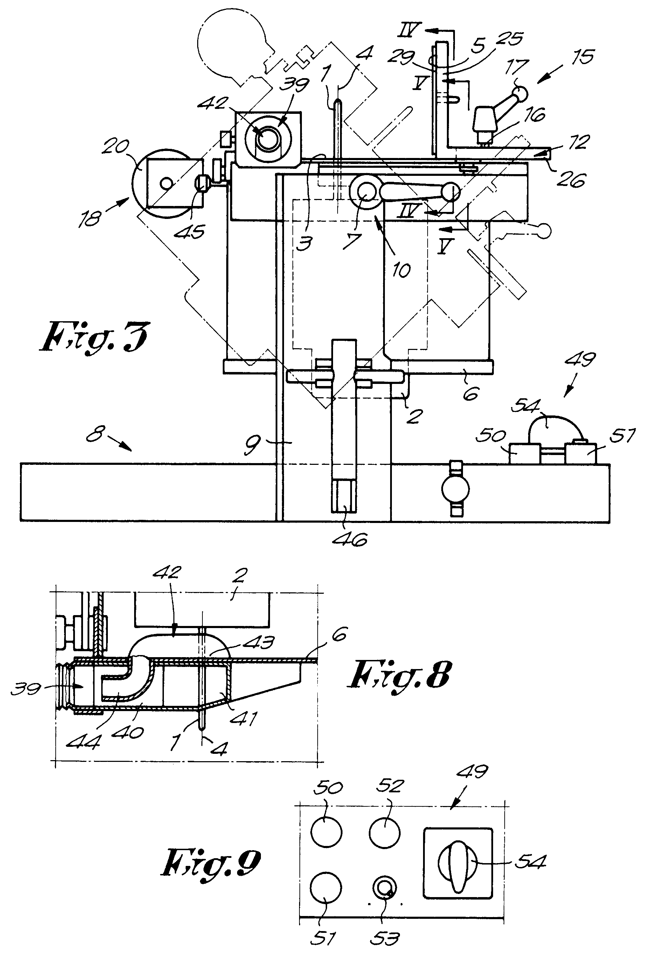

Vorzugsweise, sind die erste Stützfläche 3 und die zweite Stützfläche 5 zusammen drehbar und unter einem beliebigen Winkel einstellbar, dermaßen daß alle Stellungen zwischen der von Abbildung 1 und Abbildung 3 eingenommen werden können, bei der in der einen äußersten Stellung die erste Stützfläche sich vertikal und die zweite Stützfläche 5 sich horizontal befindet, während in der anderen äußersten Stellung die erste Stützfläche 3 horizontal und die zweite Stützfläche 5 vertikal steht.

Um das Obengenannte zu erhalten, ist die Bearbeitungsmaschine laut der gezeigten Ausführungsform aus einem drehbaren Teil 6 aufgebildet das verdrehbar eine horizontale Achse 7 entlang, in einem Rahmen 8, besonders zwischen zwei vertikalen Stützen hiervon montiert ist. Das (um)drehbare Teil 6 kann unter einem beliebigen Winkel eingestellt werden durch das Anspannen von Spannmitteln 10 die mit der Achse 7 zusammenarbeiten, zum Beispiel in Form eines Handgriffes mit dem das Teil 6 zwischen die Stützen 9 festgeklemmt werden kann.

Es ist klar daß das Ganze vorzugsweise versehen ist von nicht in den Abbildungen gezeigten Anschlägen die die äußersten Stellungen des umdrehbaren Elementes 6 bestimmen.

Die erste Stützfläche 3 befindet sich an einer Seite vom Teil 6. Übrigens bildet dieses umdrehbare Teil 6 eine Behausung für den Motor 2.

Die zweite Stützfläche 5 schließt mit einem Rand gegen die erste Stützfläche an. Sie ist hierbei die erste Stützfläche 3 entlang, versetzbar, weil es zu einem Teil 12 gehört das mittels Führungsstücke 13 verschiebbar ist eine Führung 14 entlang, und daran festgeklemmt werden kann auf einer beliebigen Stelle mittels Spanmittel 15, wie zum Beispiel eine Spannschraube 16 die mit einem Handgriff 17 angeschraubt werden kann. Die Versetzung der zweiten Stützfläche 5 laut der Richting V kann mittels einer Feinregeleinrichtung eingestellt werden. Dazu ist die Führung 14 axial verschiebbar in am Teil 6 befestigten Sitzen und kann axiaal versetzt werden mittels eines Drehknopfes 20 und einer Übertragung 21 zwischen dem Drehknopf 20 und der Führung 14.

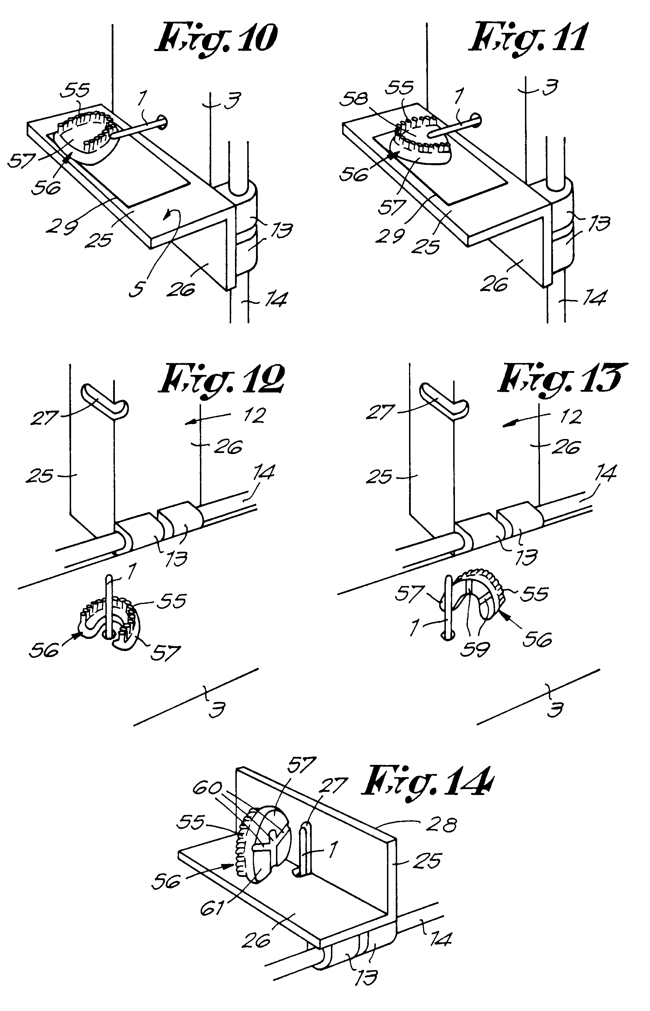

Die zweite Stützfläche 5 kann vorzugsweise völlständig von der ersten Stützfläche 3 entfernt werden. Dazu ist das obengenannte Teil 12 nur an einer Seite und einer Führung 14 wie obengenannt befestigt, so daß dieses Teil wie gezeigt in Abbildung 4 völlständig auf die Seite gedreht werden kann.

Wie gezeigt in den Abbildungen 3 und 5 ist das Teil 12 an seinem freien Ende vorzugsweise versehen von Führungsmitteln 22 dermaßen daß dieses Teil 12 ausschließlich in der am weitesten vom Schnittwerkzeug 1 entfernten Stellung, von der ersten Stützfläche 3 weggedreht werden kann. Diese Führungsmittel 22 bestehen zum Beispiel aus einem an das Teil 12 angebrachten Element 23 das mit einer Führung 24 am Teil 6 zusammenarbeitet, wobei dieses Element 23 wie gezeigt in Abbildung 3 sich ausschließlich in der völlständig zurückgezogen Stellung von der zweiten Stützfläche von hinter der Führung 24 lösen kann.

Wie gezeigt in den Abbildungen 2, 4 und 6 ist das obengenannte Teil 12 vorzugsweise L-förmig ausgeführt. Besonders noch ist dieses Teil aus einer ersten Platte 25 gebildet die die zweite Stützfläche definiert, und einer senkrecht darauf stehenden zweiten Platte 26, die in dem niedergeklappten Zustand des Teiles 12 auf der ersten Stützfläche 3 ruht. Wie noch in den Abbildungen 2, 4 und 6 gezeigt ist, zeigen die Platten 25 und 26 eine Nutenförmige Aussparung 27 die zuläßt daß durch das Verschieben vom Teil 12, das Schnittwerkzeug 1 hindurch die Platte 25 präsentiert werden kann, dermaßen daß das Schnittwerkzeug 1 sich auf der Höhe der Hinterseite 28 der Platte 25 befindet.

Die zweite Stützfläche 5 kann versehen sein von einem wegnehmbaren Abdeckplatte 29, dermaßen daß beim Ausführen einer Bearbeitung auf dieser Stützfläche nichts durch der Aussparung 27 gehindert wird. Die Abdeckplatte 29 paßt dazu zum Beispiel mit zwei daran befestigten Stiften 30 in Öffnungen 31 in der Platte 25.

Um die zweite Stützfläche 5 wiederholt bis auf wohlbestimmte Abstände D vom Schnittwerkzeug 1 zu bringen ist die Bearbeitungsmaschine vorzugsweise versehen von Einstellmitteln 32 gebildet von einigen mit einanderzusammenarbeitenden Anschlägen 33, 34, 35 und 36. Wie gezeigt in den Abbildungen 2 und 7 ist der Anschlag 33 fest mit dem Teil 6 verbunden, während die Anschläge 34, 35 und 36 auf einer drehbaren Stütz auf dem Teil 12 montiert sind, dermaßen daß nach Wahl einer der Anschläge 34, 35 oder 36 mit dem Anschlag 33zusammenarbeiten kann. Die Anschläge 34, 35 und 36 und eventuell der Anschlag 33 sind einstellbar und sind dazu zum Beispiel aus Schrauben gebildet. Die Stütze 37 ist versehen von Haltmitteln 38 die immer einen wohlbestimmten Anschlag 34, 35 oder 36 in der Verlängerung des Anschlages 33 halten, wobei eine wohlbestimmte Kraft erfordert ist um die Stütze 37 zu verdrehen und eine andere Anschlag einzustellen.

Vorzugsweise ist die Maschine auch versehen von Absaugmitteln für das Entfernen vom Fräs- oder Schleifstaub oder dergleichen mehr. Laut der Erfindung wird hierzu Gebrauch gemacht von ersten Absaugmitteln 39 die wie gezeigt in Abbildung 2 bestehen aus einem Saugkanal 40 mit einer Ansaugöffnung 41 die auf einem Abstand des Schnittwerkzeuges 1 gelegen ist, besonders der zweiten Stützfläche gegenüberliegend, und (von) zweiten Absaugmitteln 42 die wie gezeigt in den Abbildungen 2 und 8 aus einer Ansaugöffnung 43 bestehen, vorzugsweise konzentrisch rings um das Schnittwerkzeug 1 und (aus) einem Saugkanal 44 mit dem diese Öffnung 43 an den obengenannten Saugkanal 40 angeschlossen ist.

Noch ein besonderes Kennzeichen der Erfindung besteht darin daß als Schnittwerkzeug vorzugsweise einen besonderen dazu entwickelten hartmetallen Schaftfräser angewendet wird, dadurch gekennzeichnet daß er eine funktionelle Schnittlänge zeigt von wenigstens 4 cm und vorzugsweise 5 cm und daß er eine gerandelte Schnittobenfläche hat. Durch diese Länge hat man den Vorteil daß viele Bearbeitungen an Gipsmodellen ausgeführt werden können. Die gerandelte Schnittobenfläche hat den Vorteil daß der Fräser relativ ungefährlich ist für die Personen die mit der Bearbeitungsmaschine Bearbeitungen ausführen.

Es ist klar daß auch andere Schnittwerkzeuge montiert werden können, wie zum Beispiel kleine Kreissäge, Bohrer, Schleifscheiben und dergleichen mehr.

Selbstverständlich ist die Maschine versehen von einer Verriegelung 45, zum Beispiel wie angegeben ist in Abbildung 2, mit der die Achse vom Motor 2 gegen Verdrehung verriegelt werden kann, dermaßen Maße daß das Schnittwerkzeug 1 mittels eines Schlüssels 46, der auf dem Spannkopf 47 paßt, losgeschraubt werden kann und ein anderes Werkzeug an die Stelle davon angebracht werden kann. Die Verriegelung 45 kann hierbei versehen sein von einer Entriegelung 48 an die eventuell ein Mikroschalter gekoppelt ist dermaßen daß die Speisung vom Motor 2 ausgeschaltet wird solange die Verriegelung 45 eingeschaltet ist.

Es ist klar daß die Maschine mit einem passenden Bedienfeld 19 ausgerüstet werden soll, zum Beispiel wie gezeigt in Abbildung 9. Hierbei ist der versehen von Tasten 50, 51 und 52, beziehungsweise für das Starten von dem Motor 2, das Stoppen von dem Motor 2 und das Ein- und Ausschalten von einem nicht in den Abbildungen gezeigten Saugeinrichtung, wie auch von einem Drehzahlregulator 53 und einem Hauptschalter 54.

Einige der verschiedenen Möglichkeiten für das Gebrauch der Bearbeitungsmaschine sind in den Abbildungen 10 bis 14 gezeigt.

In Abbildung 10 ist gezeigt wie der Übergang von dem Zahnkranz 55 eines Gipsmodelles 56 zum Grundteil 57 ausgeführt wird, durch das Modell 56 auf der Abdeckplatte 29 über die zweite Stützfläche 5 zu verschieben.

In Abbildung 11 ist gezeigt wie die lingualen und palatalen Flächen 58 eines Modelles ausgeführt werden können.

In Abbildung 12 ist gezeigt wie ein Zahnkranzmodell ausgeführt werden kann. Hierbei ist die erste Stützfläche in eine horizontale Stellung gebracht und ist das Teil 12 auf die Seite gestellt.

In Abbildung 13 ist gezeigt wie Befestigungsrillen 59 in einem Modellkranz ausgefräst werden können.

In Abbildung 14 ist gezeigt wie Befestigungsrillen 60, zum Beispiel stemförmig, in die Unterfläche 61 vom Grundteil 57 angebracht werden können. Hierbei wird die Fräse hindurch die obengenannte Aussparung 27 präsentiert und wird das Modell 56 gegen die Hinterseite 28 der Platte 25 gedrückt.

Weiter kann ein Modell auch frei bearbeitet werden, wobei es einfach ist daß die Bearbeitungsmaschine in eine Stellung gestellt ist wie gezeigt in Abbildung 1, dermaßen daß der Person der die Bearbeitung ausführt seine Händer auf der zweiten Stützfläche ruhen lassen kann während er das Modell 56 gegen die Fräse andrückt.

Die heutige Erfindung ist keinesfalls beschränkt auf die als Beispiel beschriebene und in den Abbildungen gezeigte Ausführungsform, aber solche Bearbeitungsmaschine kann verschiedener Varianten entsprechend, realisiert werden ohne draußen das Rahmen der Erfindung zu treten.

## Patentansprüche

1. Bearbeitungsmaschine für die Zahntechnik, dadurch gekennzeichnet daß sie besteht in die Kombination eines rotativen Schnittwerkzeuges (1), eines Motors (2) für das Antreiben des Schnittwerkzeuges (1), einer ersten Stützfläche (3) die sich senkrecht auf der Drehachse (4) des Schnittwerkzeuges (1) erstreckt und einer zweiten Stützfläche (5) die eine Stellung senkrecht auf der ersten Stützfläche (3) einnimmt oder einnehmen kann und die zum Schnittwerkzeug (1), beziehungsweise davon weg, versetzt werden kann.

2. Bearbeitungsmaschine gemäß Anspruch 1, dadurch gekennzeichnet daß die zweite Stützfläche (5) von der ersten Stützfläche (3) entfernbar ist.

3. Bearbeitungsmaschine gemäß Anspruch 2, dadurch gekennzeichnet daß die zweite Stützfläche (5) drehbar ist, wobei sie einerseits in eine Stellung anschließend gegen die erste Stützfläche (3) gebracht werden kann, und anderseits auf die Seite gedreht werden kann um die erste Stützfläche (3) frei zu machen.

4. Bearbeitungsmaschine gemäß einem der vorhergehenden Ansprüche, dadurch gekennzeichnet daß die erste Stützfläche (3) und die zweite Stützfläche (5) zu einem in einem Rahmen drehbaren Teil (6) gehören.

5. Bearbeitungsmaschine gemäß Anspruch 4, dadurch gekennzeichnet daß das drehbare Teil (6) über 90 grad drehbar ist, wobei in der einen äußersten Stellung die erste Stützfläche (3) vertikal und die zweite Stützfläche (5) horizontal steht, während in der anderen äußersten Stellung die erste Stützfläche (3) horizontal und die zweite Stützfläche (5) vertikal steht.

6. Bearbeitungsmaschine gemäß einem der vorhergehenden Ansprüche, dadurch gekennzeichnet daß die zweite Stützfläche (5) zu einem Teil (12) gehört das um die obengenannte Versetzung (V) zu erhalten verschiebbar ist eine Führung (14) entlang, wobei das Teil (12) mit Spannmitteln an die Führung festgeklemmt werden kann.

7. Bearbeitungsmaschine gemäß Anspruch 6, dadurch gekennzeichnet daß Sie versehen ist von einem Feinregeleinrichtung (18) für das Versetzen von der zweiten Stützfläche (5), gebildet von einem Drehknopf (20) mit dem die obengenannte Führung (14) versetzt werden kann.

8. Bearbeitungsmaschine gemäß Anspruch 6 oder 7, dadurch gekennzeichnet daß die zweite Stützfläche (5) umdrehbar ist rings um die obengenannte Führung.

9. Bearbeitungsmaschine gemäß einem der Anspruch 3 oder 8, dadurch gekennzeichnet daß die zweite Stützfläche (5) zu einem drehbaren Teil (6) gehört das an seinem freien Ende mit Führungsmitteln (22) zusammenarbeitet, wodurch die zweite Stützfläche (5) ausschließlich von der ersten Stützfläche (3) weggedreht werden kann in die weiteste von dem Schnittwerkzeug entfernte Stellung.

10. Bearbeitungsmaschine gemäß eineim der vorhergehenden Ansprüche, dadurch gekennzeichnet daß die zweite Stützfläche (5) aus einer Platte (25) gebildet ist, wobei diese Platte (25) eine Aussparung (27) hat die zuläßt daß das Schnittwerkzeug (1) wenigstens teilweise bis draußen die Hinterseite (28) von dieser Platte (25) präsentiert werden kann.

11. Bearbeitungsmaschine gemäß Anspruch 10, dadurch gekennzeichnet daß die zweite Stützfläche (5) eine wegnehmbare Abdeckplatte (29) hat.

12. Bearbeitungsmaschine gemäß einem der vorhergehenden Ansprüche, dadurch gekennzeichnet daß sie mit Einstellmitteln (32) ausgerüstet ist die zulassen wiederholt die zweite Stützfläche (5) auf einem wohlbestimmten Abstand (D) von dem Schnittwerkzeug (1) einzustellen.

13. Bearbeitungsmaschine gemäß einem der vorhergehenden Ansprüche, dadurch gekennzeichnet daß sie Absaugmittel (39) hat die wenigstens aus einem Absaugkanal (40) mit Ansaugöffnung (41) bestehen die sich entlang das Schnittwerkzeug (1) befindet.

14. Bearbeitungsmaschine gemäß einem der vorhergehenden Ansprüche, dadurch gekennzeichnet daß sie Absaugmittel (42) hat die wenigstens aus einem Absaugkanal (44) mit Ansaugöffnung (43) bestehen die sich in der ersten Stützfläche (3), konzentrisch rings um die Antriebachse von dem Schnittwerkzeug (1) befindet.

15. Bearbeitungsmaschine gemäß einem der vorhergehenden Ansprüche, dadurch gekennzeichnet daß das Schnittwerkzeug (1) aus einer Fräse besteht.

16. Bearbeitungsmaschine gemäß Anspruch 15, dadurch gekennzeichnet daß die Fräse stiftförmig ist und eine funktionelle Schnittlänge von wenigstens 4 cm hat.

17. Bearbeitungsmaschine gemäß Anspruch 15 oder 16, dadurch gekennzeichnet daß die Fräse eine gerandelte Schnittoberfläche hat.
